# EUROPÄISCHE PATENTSCHRIFT

(11) **EP 3 782 272 B1**
(45) Veröffentlichungstag und Bekanntmachung des Hinweises auf die Patenterteilung: **31.01.2024**
(21) Anmeldenummer: 19829521.4
(22) Anmeldetag: 18.12.2019
(51) Int. Cl.: B60L 3/00, B60L 3/04, H02M 1/32

(54) **ZWISCHENKREISENTLADUNGSEINHEIT, ELEKTRISCHES GERÄT UND FAHRZEUG**
INTERMEDIATE CIRCUIT DISCHARGE UNIT, ELECTRICAL DEVICE AND VEHICLE
UNITÉ DE DÉCHARGE DE CIRCUIT INTERMÉDIAIRE, APPAREIL ÉLECTRIQUE ET VÉHICULE

(30) Priorität: 21.12.2018 DE 102018133470
(43) Veröffentlichungstag der Anmeldung: 24.02.2021
(73) Patentinhaber: JHEECO E-DRIVE AG, 9492 Eschen (LI)
(72) Erfinder: MARXER, Christian, 9493 Mauren (LI)
(74) Vertreter: Grünecker Patent- und Rechtsanwälte PartG mbB
(86) Internationale Anmeldenummer: PCT/EP2019/085947
(87) Internationale Veröffentlichungsnummer: WO 2020/127481

(56) Entgegenhaltungen:
- WO-A1-2011/085838
- DE-A1-102008 010 978
- DE-A1-102008 061 585
- DE-A1-102012 100 951
- US-A- 5 998 973
- US-A1- 2017 355 267

## Beschreibung

Die Erfindung betrifft eine elektrische Baueinheit nach dem Anspruch 1. Des Weiteren betrifft die Erfindung ein Fahrzeug mit einer elektrischen Baueinheit.

Elektrische Geräte weisen in der Regel einen Zwischenkreis mit einem Zwischenkreiskondensator u.a. zur Glättung von Spannungsspitzen auf. Ab Spannungen oberhalb von 60 V müssen die im Zwischenkreis vorhandenen Ladungen im Fehlerfall bzw. bei Abschaltung abgeführt werden.

Die Zwischenkreisentladung soll innerhalb einer gewissen Zeit erfolgen, im Automotive-Bereich beispielsweise in weniger als 5s. Demnach ist eine aktive Entladeschaltung notwendig, die den Zwischenkreis über einen Verbraucher (z.B. einen Widerstand) kurzschließt. Aktiv bedeutet hierbei insbesondere, dass zum Kurzschließen ein Schalter oder dergleichen betätigt werden muss. Eine Möglichkeit ist das Bereitstellen eines schaltbaren Entladezweigs mit einem kleinen Widerstand. Im Betrieb ist der Entladezweig geöffnet, sodass kein Strom fließt. Aus Sicherheitsgründen muss außerdem auch eine passive Entladeschaltung vorgehalten werden. Die passive Entladeschaltung wird in der Regel in einem eigenen Entladezweig über hochohmige Widerstände realisiert. Der passive Entladezweig ist stets in Betrieb und erzeugt Verlustleistung. Die Entladedauer liegt mit ca. 1-5 min jedoch aufgrund des hohen Widerstandes deutlich über der Entladedauer einer aktiven Entladeschaltung. Beispielsweise offenbart die Druckschrift DE 10 2008 022 776 A1 eine Entladeschaltung, bei welcher unabhängig voneinander ein dauerhaft leitender passiver Entladezweig und ein wahlweise kurzschließbarer aktiver Entladezweig vorgesehen sind. Der aktive Entladezweig wird dabei durch das Abkoppeln von Batterieschützen kurzgeschlossen. Nachteilig ist, dass im Betrieb keine schnelle Entladung aktiviert werden kann.

DE 10 2012 100951 A1 offenbart eine elektrische Schaltungsanordnung für einen 2-Level-Stromrichter mit einem Zwischenkreis, bei welchem ein dauerhaft leitender passiver Entladezweig und ein steuerbarer aktiver Entladezweig vorgesehen sind.

Es ist Aufgabe der Erfindung eine elektrische Baueinheit umfassend wenigstens eine Zwischenkreisentladungseinheit anzugeben, die einen einfachen Aufbau aufweist, eine vorteilhafte Entladefunktion für einen Zwischenkreis eines Multi-Level-Umrichters bereitstellt, sowie die Bereitstellung einer Spannungsbalancierungsfunktion ermöglicht. Darüber hinaus ist es Aufgabe der Erfindung ein Fahrzeug anzugeben.

Diese Aufgabe wird in Hinblick auf die Zwischenkreisentladungseinheit durch den Anspruch 1 gelöst, und mit Blick auf das Fahrzeug durch den Anspruch 12. Bevorzugte Ausführungsformen sind in den abhängigen Ansprüchen angegeben.

Anhand der vorliegenden Erfindung sind Entladeschaltungen für Multi-Level-Inverter vorgesehen, sodass jeweils eine aktive und passive Spannungsbalancierung bzw. Spannungssymmetrierung bereitstellbar ist. Ferner sind die Spannungen für verschiedene Spannungslevel bzw. Spannungsniveaus gezielt einstellbar, insbesondere für und/oder während eines Ladevorgangs.

Unter Multi-Level-Invertern sind Inverter oder Umrichter zu verstehen, welche wenigstens drei unterschiedliche Spannungsniveaus aufweisen und somit zwei oder mehr Zwischenkreise aufweisen können. Jeder Zwischenkreis weist ein absolutes Spannungspotential und ein relatives Spannungspotential auf. Spannungsbalancierung bzw. Spannungssymmetrierung ist die Anpassung der Spannungspotentiale mehrer Zwischenkreisspannungen zueinander, so dass die relativen Zwischenkreisspannungen gleich oder unterschiedlich groß sein können. Gemäß der vorliegenden Erfindung ist vorgesehen, dass der aktive Entladezweig durch den passiven Entladezweig steuerbar ist. So kann eine Entladung über den aktiven Entladezweig bedarfsweise aktivierbar oder deaktivierbar sein.

Hierzu ist der passive Entladezweig elektrisch mit dem ersten Steueranschluss verbunden. Indem entlang des passiven Entladezweiges eine Entladung stattfindet kann an dem ersten Steueranschluss keine oder eine elektrische Spannung anliegen. Anhand des bedarfsweisen Anlegens einer Spannung an dem ersten Steueranschluss mittels des passiven Entladezweigs kann eine Entladung über den aktiven Entladezweig aktivierbar bzw. deaktivierbar sein.

Ferner ist die elektrische Baueinheit insbesondere für ein Fahrzeug vorgesehen, mit wenigstens einer obigen Zwischenkreisentladungseinheit, wobei eine Mehrzahl von Zwischenkreisentladungseinheiten als eine Serienschaltung angeordnet ist.

Des Weiteren ist vorgesehen, dass die elektrische Baueinheit ein Antriebsumrichter für einen Traktionsmotor eines Fahrzeuges mit mindestens drei Spannungsleveln bzw. Spannungsniveaus ist, wobei die Zwischenkreisentladungseinheiten derart ansteuerbar sind, dass die einzelnen Spannungslevel bzw. Spannungsniveaus des Antriebsumrichters einstellbar sind, insbesondere für und/oder während eines Lade- und/oder Fahrbetriebs.

Dadurch können beispielsweise Spannungsniveaus von bzw. Spannungsaufteilung zwischen Zwischenkreiskondensatoren vor oder bei Verbindung mit einer Ladungsquelle gezielt eingestellt werden zur Erzeugung einer gewollten Spannungssymmetrie oder Spannungsasymmetrie. Weiterhin können die Spannungsniveaus der Zwischenkreiskondensatoren vor und/oder während des Ladevorgangs gezielt symmetrisch oder asymmetrisch eingestellt werden, insbesondere in Abhängigkeit des Ladezustandes einer Batterie und in Abhängigkeit der Ladespannung einer Ladequelle.

Dabei kann der Antriebsumrichter in Verbindung mit Ladeinduktivitäten vorteilhaft als Hochsetzsteller zur Anpassung eines Spannungslevels einer Ladungsquelle an ein Spannungslevel einer mit dem Antriebsumrichter verbundenen Batterie ausgebildet sein. Somit ist es auf vorteilhafte Weise möglich, anhand der elektrischen Baueinheit mit der Zwischenkreisentladungseinheit bedarfsweise verschiedene Spannungslevel bzw. Spannungsniveaus gezielt einzustellen.

Nach einer bevorzugten Ausführungsform umfassen das erste Entladeelement und das zweite Entladeelement jeweils einen Widerstand. Erstes und/oder zweites Entladeelement können weitere parallel oder seriell geschaltete Widerstände umfassen. Erstes und/oder zweites Entladeelement können insbesondere als genau ein Widerstand ausgebildet sein.

Somit ist entlang des aktiven Entladezweigs sowie entlang des passiven Entladezweigs jeweils ein Verbraucher vorgesehen, der zur Durchführung bzw. Bereitstellung einer zweckmäßigen Zwischenkreisentladung geeignet ist. Insbesondere können der aktive Entladezweig und/oder der passive Entladezweig über das erste Entladeelement bzw. das zweite Entladeelement kurzgeschlossen werden, um eine zweckmäßige Entladung des Zwischenkreises, insbesondere im Fehlerfall oder bei einer Abschaltung einer elektrischen Baueinheit, bereitzustellen.

In einer Ausführungsform ist der aktive Entladezweig als eine Reihenschaltung aus dem ersten Entladeelement und einem ersten Schaltelement, das den ersten Steueranschluss aufweist, ausgebildet.

So kann entlang des ersten Entladeelements, vorzugsweise ausgebildet als ein niederohmiger Widerstand, eine Entladung stattfinden, sobald das erste Schaltelement über den ersten Steueranschluss durchgeschaltet/leitend geschaltet wird. Eine aktive Entladung kann in der Zwischenkreisentladungseinheit insbesondere durch einen selbsttätigen Schaltvorgang, also ohne Eingriff bzw. Steuereingriff von außen, bereitgestellt werden.

Nach einer Ausführungsform ist eine Diode (Freilaufdiode) in Parallelschaltung zu dem ersten Schaltelement in dem aktiven Entladezweig, insbesondere in Sperrrichtung, vorgesehen. Das erste Schaltelement kann insbesondere als IGBT (integrated bipolar transistor), insbesondere mit integrierter Freilaufdiode, ausgebildet sein. Die Anordnung der Diode in Sperrrichtung bedeutet, dass ein Stromfluss in der üblicherweise vorgesehenen Richtung zur Zwischenkreisentladung nicht über die Diode fließen kann, sondern ausschließlich über das schaltbare, erste Schaltelement des aktiven Entladezweigs. Flingegen ist ein Stromfluss in Gegenrichtung, also an dem getrennt geschalteten ersten Schaltelement vorbei, über die parallelgeschaltete Diode und das erste Entladeelement, vorzugsweise in Form eines Widerstandes als Verbraucher, zu jedem Zeitpunkt möglich.

In einer weiteren Ausführungsform weist der passive Entladezweig wenigstens einen ersten Subzweig und einen zweiten Subzweig auf. Insbesondere der erste Subzweig ist in Verbindung mit dem Steueranschluss des aktiven Entladezweiges ausgebildet und der zweite Subzweig als ein Sub-Entladezweig ausgebildet ist.

Somit ist der passive Entladezweig in parallelgeschaltete Subzweige aufgeteilt, um über den passiven Entladezweig eine Entladung sowie eine Steuerbarkeit des aktiven Entladezweiges über den ersten Steueranschluss jeweils bereitstellen zu können.

Insbesondere kann die Entladung entlang des aktiven Entladezweiges ohne einen externen Steuereingriff, insbesondere anhand des passiven Entladezweiges, aktivierbar sein. Zur Einleitung der aktiven Entladung bzw. Aktivierung des aktiven Entladezweigs kann der erste Steueranschluss mit einer Spannung bzw. einem Strom zweckmäßig beaufschlagbar sein.

Der passive Entladezweig kann weitere parallelgeschaltete Subzweige aufweisen, insbesondere einen dritten und/oder vierten Subzweig.

Gemäß einer Ausführungsform sind der aktive Entladezweig und der passive Entladezweig derart ausgebildet und miteinander verbunden, dass bei Sperrung einer Entladung entlang des wenigstens einen zweiten Subzweiges - im Falle eines dritten, vierten oder weiterer Subzweige bei Sperrung aller Subzweige außer des ersten Subzweiges - anhand des ersten Subzweiges eine Entladung über den aktiven Entladezweig auslösbar ist, insbesondere stets auslösbar ist.

Indem eine passive Entladung nur entlang des ersten Subzweiges ausgeführt wird, kann eine Spannung bzw. Stromfluss an den ersten Steueranschluss des aktiven Entladezweiges erfolgen. So kann der aktive Entladezweig mittels dem passiven Entladezweig über den ersten Steueranschluss geschaltet werden, um eine aktive Entladung zu ermöglichen.

Bevorzugter Weise ist vorgesehen, dass bei Einleitung einer passiven Entladung entlang des passiven Entladekreises entlang eines zweiten und/oder dritten und/oder vierten etc. Subzweiges eine aktive Entladung über den aktiven Entladekreis eingestellt bzw. deaktiviert wird. Dadurch, dass der passive Entladezweig die Steuerspannung für den Steueranschluss des ersten Schaltelements des aktiven Entladezweigs bereitstellt, kann eine aktive Entladung auch ohne Vorliegen einer externen Steuerspannung, beispielsweise bei Ausfall der Steuerspannung eines Steuergeräts, gewährleistet werden.

In einer weiteren Ausführungsform weist der erste Subzweig ein Spannungsbegrenzungsventil, insbesondere eine Z-Diode, auf, wobei das Spannungsbegrenzungsventil eine Durchbruchspannung (Sperrspannung) aufweist, zur Auslösung einer aktiven Entladung entlang des aktiven Entladezweiges, insbesondere mit einer Durchbruchspannung von bis zu 15 V.

Die Steuerspannung des ersten Steueranschlusses bzw. Schaltelementes ist dabei gleich oder niedriger als die Durchbruchspannung des Spannungsbegrenzungsventils.

Weiterhin ist eine Entladung längs des passiven Entladezweiges entlang des zweiten Entladeelements unabhängig von dem Schaltzustand eines zweiten, dritten, vierten, etc. Subzweiges spätestens ab Vorliegen besagter Durchbruchspannung gewährleistet. In anderen Worten: Eine Entladung über den passiven Entladezweig findet kontinuierlich statt, wenn ein Subzweig leitend geschaltet ist und/oder die notwendige Durchbruchspannung des Strombegrenzungsventils erreicht wurde.

In einer besonders vorteilhaften Ausführung weist der erste Subzweig zwei oder mehr parallel geschaltete Spannungsbegrenzungsventile, insbesondere Z-Dioden, auf. Dadurch kann die Ausfallsicherheit erhöht werden.

Somit ist entlang des ersten Subzweigs des passiven Entladezweiges ein Stromfluss sperrbar bis die vorgebbare Durchbruchspannung des Spannungsbegrenzungsventils erreicht ist.

Um ein Schalten über den ersten Steueranschluss des aktiven Entladezweiges zu ermöglichen, ist die notwendige Steuerspannung des ersten Steueranschlusses zum Leitend-Schalten des ersten Schaltelements kleiner als die Durchbruchspannung des oder der Spannungsbegrenzungsventile.

Im Sinne der vorliegenden Erfindung kann der passive Entladezweig somit stets zur Entladung einsetzbar sein, insbesondere indem eine für den ersten Steueranschluss notwendige Steuerspannung durch das Spannungsbegrenzungsventil bereitgestellt wird, ohne das ein Schaltvorgang oder dergleichen aktiv ausgeübt werden muss.

Darüber hinaus kann der passive Entladezweig neben dem ersten Subzweig weitere, schaltbare Entladezweige (Subzweige) aufweisen. Im Sinne der vorliegenden Erfindung kann der passive Entladezweig sowohl eine Entladung entlang des zweiten Entladeelements allein entlang des ersten Subzweiges bereitstellen - wobei hierbei eine Entladung entlang des ersten Entladeelements aktiviert ist bzw. wird - als auch aktiv schaltbare Schaltelemente in weiteren Subzweigen aufweisen zur Entladung entlang des zweiten Entladeelementes, wobei hierbei eine Entladung entlang des ersten Entladeelements deaktiviert ist.

Hingegen ist zur aktiven Entladung über das vorzugsweise niederohmige erste Entladeelement in jedem Fall ein Schalten des aktiven Entladezweigs mittels des ersten Steueranschlusses notwendig, um eine aktive Entladung zu ermöglichen. Demnach ist der aktive Entladezweig im Betrieb getrennt und wird lediglich bedarfsweise zur aktiven Entladung durchgeschaltet.

Nach einer weiteren bevorzugten Ausführungsform weist der zweite Subzweig wenigstens ein zweites, steuerbares Schaltelement auf, zur Steuerung einer Entladung entlang des zweiten Subzweiges des passiven Entladezweiges.

So ist es möglich, eine Entladung über den passiven Entladezweig anhand eines zweiten steuerbaren Schaltelements in dem zweiten Subzweig zu regeln bzw. an-oder abzuschalten.

Vorzugsweise wird eine aktive Entladung beendet sobald eine Entladung über einen zweiten und/oder dritten und/oder vierten Subzweig des passiven Entladezweigs ermöglicht wird, insbesondere durch Betätigung des zweiten steuerbaren Schaltelements in dem zweiten Subzweig.

Gemäß einer bevorzugten Ausführungsform sind sämtliche Schaltelemente des aktiven Entladezweiges und des passiven Entladezweiges in Form von Transistoren ausgebildet.

Besonders bevorzugt ist das Schaltelement des aktiven Entladezweiges als IGBT (insulated gate bipolar transistor) ausgebildet.

So kann eine schaltbare aktive Entladung in Abhängigkeit von einem von wenigstens zwei möglichen Entladepfaden des passiven Entladezweigs bereitstellbar sein. Das erste, transistorförmige Schaltelement ist mit dem ersten Steueranschluss über den passiven Entladezweig ansteuerbar. Hingegen kann das wenigstens eine zweite, transistorförmige Schaltelement mit dem zweiten Steueranschluss über ein externes Steuersignal schaltbar sein, sodass eine Entladung über einen Subzweig des passiven Entladezweigs bedarfsweise schaltbar zur Verfügung gestellt werden kann. Sobald eine Entladung über einen Subzweig des passiven Entladezweigs erfolgt, kann die aktive Entladung durch einen Schaltvorgang des transistorförmigen, ersten Schaltelements unterbrochen bzw. beendet werden.

In einer Ausführungsform weist die Zwischenkreisentladungseinheit wenigstens ein Steuergerät auf, das mit dem wenigstens einen zweiten Steueranschluss des passiven Entladezweiges verbunden ist, zur Steuerung einer Entladung entlang des wenigstens einen zweiten Subzweiges.

Anhand des Steuergeräts kann eine Entladung entlang des passiven Entladezweiges über den zweiten Steueranschluss des wenigstens einen zweiten Schaltelements in dem wenigstens einen weiteren, zweiten Subzweig bereitstellbar sein. Ist das zweite Schaltelement durchgeschaltet, erfolgt eine Entladung entlang des zweiten Subzweiges und des zweiten Entladeelements des passiven Entladezweiges.

Insbesondere wird bei Durchschalten des zweiten Schaltelements in dem zweiten Subzweig ein elektrischer Strom aus dem ersten Subzweig und somit von dem ersten Steueranschluss des ersten Schaltelements abgeleitet. Somit wird das erste Schaltelement des aktiven Entladezweiges getrennt geschaltet, sobald ein zuvor anliegender Strom bzw. eine zuvor anliegende Spannung mittels eines Durchschaltens des zweiten Schaltelements entlang des zweiten Subzweigs abgeleitet wird bzw. ist.

Bevorzugter Weise können eine Vielzahl von weiteren Subzweigen mit jeweils einem weiteren Schaltelement in dem passiven Entladezweig vorgesehen sein, die mittels des Steuergeräts getrennt voneinander schaltbar sind.

In einem weiteren nebengeordneten Aspekt der Erfindung ist ein Fahrzeug mit wenigstens einer erfindungsgemäßen Zwischenkreisentladungseinheit und/oder wenigstens einer elektrischen Baueinheit gemäß der vorliegenden Erfindung vorgesehen.

Im Folgenden wird die Erfindung mit Bezug auf die beigefügten Zeichnungen anhand von mehreren Ausführungsbeispielen im Detail erläutert.

Es zeigen schematisch:
- Fig. 1: einen Zwischenkreis mit einem Zwischenkreiskondensator gemäß dem Stand der Technik;
- Fig. 2: ein erstes Beispiel einer Zwischenkreisentladungseinheit; nicht im Einklang mit der Erfindung gemäß Anspruch 1
- Fig. 3: die Zwischenkreisentladungseinheit gemäß Fig. 2, insbesondere während einer aktiven Entladung;
- Fig. 4: die Zwischenkreisentladungseinheit gemäß Fig. 2 während einer Entladung entlang des passiven Entladezweiges;
- Fig. 5: ein Beispiel eines 2-Level-Inverters in Kombination mit einer Zwischenkreisentladungseinheit;
- Fig. 6: ein erstes Ausführungsbeispiel eines erfindungsgemäßen Multi-Level-Inverters in Kombination mit zwei seriell verschalteten Zwischenkreisentladungseinheiten; und
- Fig. 7: ein zweites Ausführungsbeispiel eines erfindungsgemäßen Multi-Level-Inverters in Kombination mit vier seriell verschalteten Zwischenkreisentladungseinheiten.

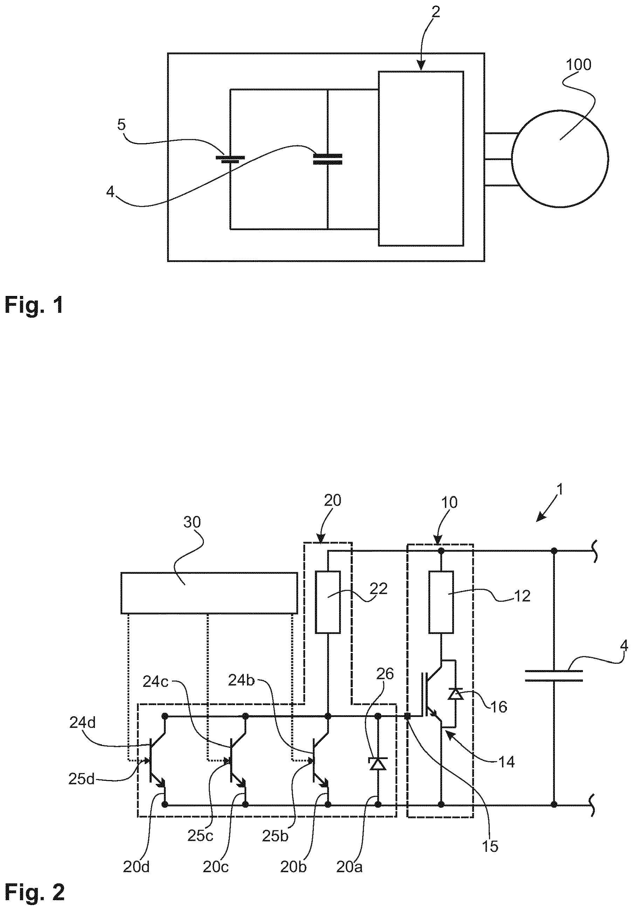

In Fig. 1 ist ein Zwischenkreis mit einem Zwischenkreiskondensator 4 gemäß dem Stand der Technik gezeigt. Insbesondere ist ein Elektromotor 100 mit einem Inverter 2 verbunden. Der Inverter 2 ist mit einem Zwischenkreiskondensator 4 parallelgeschaltet. An den Klemmen, und somit parallel zu dem Kondensator, ist wiederum eine Batterie bzw. eine Energieversorgungseinheit 5 vorgesehen. Somit können anhand des Zwischenkreiskondensators 4 insbesondere Spannungsspitzen geglättet werden.

Fig. 2 veranschaulicht ein erstes Beispiel einer Zwischenkreisentladungseinheit 1. Insbesondere ist die Zwischenkreisentladungseinheit 1 in Parallelschaltung mit dem Zwischenkreiskondensator 4 vorgesehen. Die Schaltung weist eine erste und eine zweite Stromschiene mit zwei Spannungspotentialen auf.

Die Zwischenkreisentladungseinheit weist einen aktiven Entladezweig 10, einen passiven Entladezweig 20 sowie ein Steuergerät 30 auf. Der passive Entladezweig 20 und der aktive Entladezweig 10 sind parallel geschaltet. Der aktive Entladezweig 10 kann auch als Entladekreis angesprochen werden. Der passive Entladezweig kann auch als Steuerkreis angesprochen werden.

Der aktive Entladezweig 10 weist eine Reihenschaltung eines ersten Entladeelements bzw. Entladewiderstands 12, als einen Verbraucher, und eines ersten Schaltelements 14 auf. Wiederum parallel geschaltet zu dem ersten Schaltelement 14 ist eine Diode 16 angeordnet.

Vorzugsweise ist der erste Entladewiderstand 12 als ein niederohmiger Entladewiderstand vorgesehen. Dadurch ist ein hoher Leistungsumsatz an elektrischer Energie möglich.

Die Diode 16 ist gemäß Fig. 2 parallel zum ersten Schaltelement 14 und in üblicher Stromflussrichtung zur Zwischenkreisentladung, also einer Stromrichtung von oben nach unten, sperrend angeordnet. So kann Strom gemäß Fig. 2 von unten nach oben durch die Diode 16 in Durchlassrichtung strömen und somit das erste Schaltelement 14 umgehen. In Sperrrichtung der Diode 16, also von oben nach unten, muss ein Strom hingegen zwingend das erste Schaltelement 14 passieren.

Das erste Schaltelement 14 weist ferner einen ersten Steueranschluss 15 auf, der mit dem passiven Entladezweig 20 elektrisch verbunden ist. Somit kann anhand des passiven Entladezweig 20 ein Schaltvorgang des ersten Schaltelements 14 zur bedarfsweisen Durchschaltung des ersten Schaltelements 14 und damit zur aktiven Entladung erfolgen. Im Betrieb eines mit der Entladeschaltung verbundenen elektrischen Gerätes ist der aktive Entladezweig 10 vorzugsweise deaktiviert, d.h. getrennt bzw. nicht-leitend, wobei eine aktive Entladung insbesondere während eines Fehlerfalls oder eines Abschaltens aktivierbar sein kann.

Des Weiteren weist der passive Entladezweig 20 gemäß Fig. 2 einen zweiten Entladewiderstand 22 auf, sowie einen ersten, zweiten, dritten und vierten Subzweig 20a; 20b; 20c; 20d. Die Subzweige 20a; 20b; 20c; 20d sind mit dem zweiten Entladewiderstand 22 in Reihe geschaltet und untereinander bzw. zueinander parallel geschaltet.

Bevorzugter Weise ist das zweite Entladeelement bzw. Entladewiderstand 22 als ein hochohmiger Entladewiderstand 22 ausgebildet. Dadurch ist der Leistungsumsatz an elektrischer Energie durch den Entladewiderstand 22 begrenzt. Der Entladewiderstand 22 kann als ein erster Dipol verstanden werden.

Der erste Subzweig 20a weist eine Spannungsbegrenzungsventil 26 auf, insbesondere in Form einer Z-Diode mit einer bevorzugten Sperr- bzw. Durchbruchspannung von 15V. Zwischen dem Spannungsbegrenzungsventil 26 und dem zweiten Entladewiderstand 22 liegt eine elektrische Verbindung zu dem ersten Steueranschluss 15 des ersten Schaltelements 14 des aktiven Entladezweigs 10 vor. Die Z-Diode 26 kann als ein zweiter Dipol verstanden werden. Erster und zweiter Dipol sind in Reihe geschaltet und weisen folglich einen Verbindungspunkt auf. Erster und zweiter Dipol bilden einen Spannungsteiler aus.

Somit kann der erste Subzweig 20a des passiven Entladezweiges ab der vorbestimmbaren Durchbruchspannung, vorzugsweise von 15V, als dauerhaft durchleitend geschaltet aufgefasst werden. Bis zu der vorbestimmbaren Durchbruchspannung ist der erste Subzweig 20a hingegen als dauerhaft gesperrt geschaltet aufzufassen.

Der zweite, dritte und vierte Subzweig 20b; 20c; 20d sind jeweils mit einem zweiten, dritten und vierten Schaltelement 24b; 24c; 24d ausgebildet. Die Schaltelemente 24b; 24c; 24d entlang des zweiten, dritten und vierten Subzweiges 20b; 20c; 20d weisen ferner jeweils einen zweiten, dritten bzw. vierten Steueranschluss 25b; 25c; 25d auf. Somit sind der zweite, dritte und vierte Subzweig 20b; 20c; 20d gemäß Fig. 2 identisch und in Parallelschaltung zueinander ausgebildet.

Des Weiteren sind die Steueranschlüsse 25b; 25c; 25d des zweiten, dritten und vierten Schaltelements 24b; 24c; 24d mit dem Steuergerät 30 verbunden, sodass die Schaltelemente 24b; 24c; 24d mittels eines externen Steuersignals schaltbar sind. Vorzugsweise sind das zweite, dritte und vierte Schaltelement 24b; 24c; 24d üblicherweise getrennt geschaltet. Eine Durchschaltung des zweiten, dritten und/oder vierten Schaltelements 24b; 24c; 24d zur Bereitstellung einer gezielten Entladung entlang des zweiten, dritten und/oder vierten Subzweiges 20b; 20c; 20d erfolgt anhand des Steuergerätes 30. Dabei können die einzelnen Subzweige jeweils zu unterschiedlichen Zwecken ausgebildet sein und auf unterschiedliche Auslösefaktoren reagieren. Flierzu zählen beispielsweise eine Übertemperaturabschaltung, um ein Überhitzen des Entladewiderstandes 12 zu vermeiden. Ferner können einzelne Subzweige für verschiedene Fehlerfälle vorgesehen sein, bei Verwendung in einem Fahrzeug insbesondere für ein Crashfall eines Fahrzeugs. Die Subzweige können für den entsprechenden Einsatzzweck vorteilhaft ausgestaltet sein und insbesondere weitere elektrische Komponenten aufweisen.

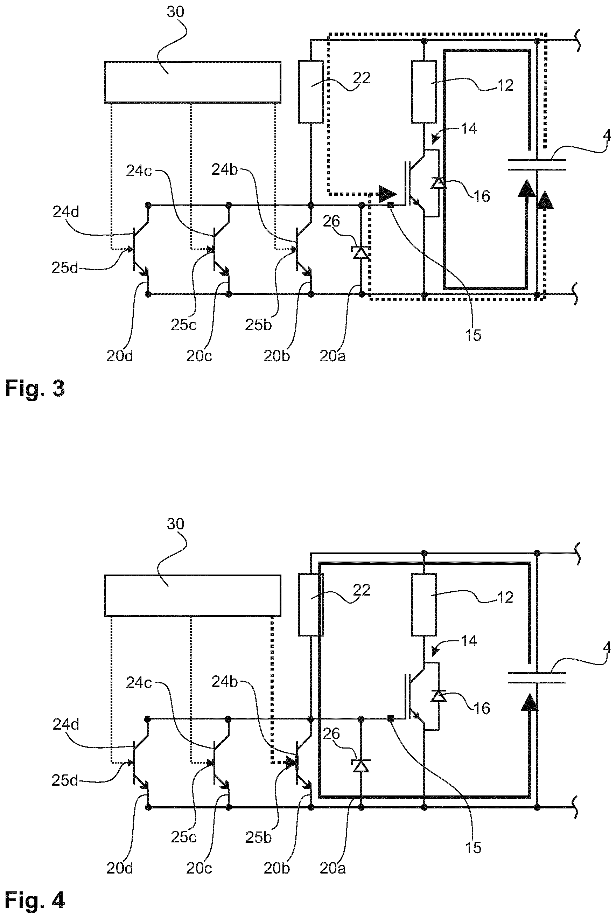

In Fig. 3 ist die Zwischenkreisentladungseinheit gemäß Fig. 2 dargestellt, insbesondere während einer aktiven Entladung.

Bei Auftreten eines Stromflusses über den zweiten Entladewiderstand 22 und den Subzweig 20a mit dem als Z-Diode ausgebildeten Spannungsbegrenzungsventil 26 liegt an dem ersten Steueranschluss 15 des ersten Schaltelements 14 eine Spannung an, die ausreichend hoch ist, um das Schaltelement zu schalten (vgl. gestrichelte Pfeildarstellung in Pfeilrichtung in Fig. 3). In diesem Sinne kann ein Durchschalten des ersten Schaltelements 14 erreicht werden, um eine aktive Entladung bereitzustellen (vgl. durchgezogene Pfeilrichtung in Fig. 3).

Ferner kann ab der vorbestimmbaren Durchbruchspannung gleichzeitig eine Entladung über den ersten Subzweig 20a und den zweiten Entladewiderstand 22 des passiven Entladezweiges 20 durchgeführt werden (vgl. gestrichelte Pfeilrichtung in Fig. 3).

Fig. 4 zeigt die Zwischenkreisentladungseinheit gemäß Fig. 2 während einer Entladung entlang des passiven Entladezweiges 20 bzw. Subzweig 20b.

Wird eines der Schaltelemente 24b; 24c; 24d des passiven Entladezweiges 20 mittels dem Steuergerät 30 durchgeschaltet (vgl. gestrichelte Pfeildarstellung in Fig. 4) oder erreicht die anliegende Spannung die Durchbruchspannung des Spannungsbegrenzungsventils 26 entlang des ersten Subzweigs 20a (vgl. gestrichelte Pfeildarstellung in Fig. 3) wird eine Entladung über den passiven Entladezweig 20 ermöglicht (vgl. durchgezogene Pfeildarstellung in Fig. 4).

Insbesondere im Zuge des Durchschaltens einer der Schaltelemente 24b; 24c; 24d des passiven Entladezweigs 20 wird eine Entladung über den aktiven Entladezweig 20 beendet bzw. unterbrochen, indem die Steuerspannung am Steueranschluss 15 unter die zum Leitend-Schalten notwendige Steuerspannung fällt, so dass das erste Schaltelement 14 wieder getrennt geschaltet wird.

Somit ist anhand des passiven Entladezweigs 20 eine bedarfsweise aktive Entladung über den aktiven Entladezweig 10 bereitstellbar, sowie eine Entladung über den passiven Entladezweig 20. Vorzugsweise können die Schaltelemente 24b; 24c; 24d des zweiten, dritten und vierten Subzweiges 20b; 20c; 20d mittels des Steuergeräts 30 individuell, also einzeln, oder kombiniert geschaltet werden, um eine geeignete Zwischenkreisentladung bereitzustellen.

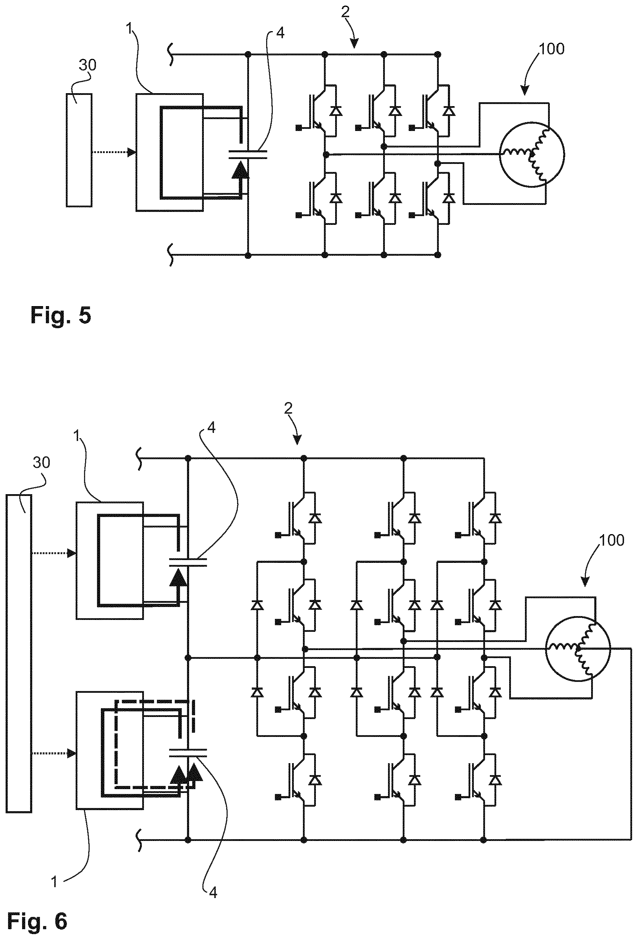

In Fig. 5 ist ein Beispiel eines 2-Level-Inverters in Kombination bzw. Parallelschaltung mit einem Zwischenkreiskondensator 4 und mit einer Zwischenkreisentladungseinheit 1 gezeigt. Insbesondere ist ein 2-Level-Inverter 2 in Verbindung mit dem Elektromotor 100 dargestellt.

Die zu dem 2-Level-Inverter 2 parallelgeschaltete Zwischenkreisentladungseinheit 1 weist unter anderem das Steuergerät 30 in geeigneter Verbindung mit vorzugsweise dem passiven Entladungszweig 20 auf.

Gemäß der in Fig. 5 gezeigten Pfeildarstellung kann eine Entladung von des Zwischenkreiskondensators 4 über die Zwischenkreisentladungseinheit 1 in zweckmäßiger Weise erfolgen.

Fig. 6 veranschaulicht ein erstes Ausführungsbeispiel eines Multi-Level-Inverters, insbesondere eines 3-Level-Inverters 2, in Kombination mit zwei seriell verschalteten, erfindungsgemäßen Zwischenkreisentladungseinheiten 1. Insbesondere sind zwei Parallelschaltungen aus jeweils einer Zwischenkreisentladungseinheit 1 und einem Zwischenkreiskondensator 4 vorgesehen, die zueinander in Reihe geschaltet sind.

Sofern eine Zwischenkreisentladung mittels der Zwischenkreisentladungseinheiten 1 ausgeführt werden soll, erfolgt eine Strom- bzw. Spannungsableitung entlang der durchgezogenen Pfeilrichtungen gemäß Fig. 6 über die beiden Zwischenkreisentladungseinheiten 1 hinweg.

Für den Anwendungsfall einer Zwischenkreisbalancierung kann ein Strom- bzw. Spannungsübertrag gemäß der gestrichelten Pfeilrichtung in Fig. 6 von einem Zwischenkreiskondensator 4 über die zugehörige Zwischenkreisentladungseinheit erfolgen. Dadurch kann die Spannung im Zwischenkreismittelpunkt zwischen den zwei Zwischenkreiskondensatoren 4 gesenkt werden. Analog kann durch Betätigung der anderen Zwischenkreisentladungseinheit die Spannung im Zwischenkreismittelpunkt zwischen den zwei Zwischenkreiskondensatoren 4 angehoben werden.

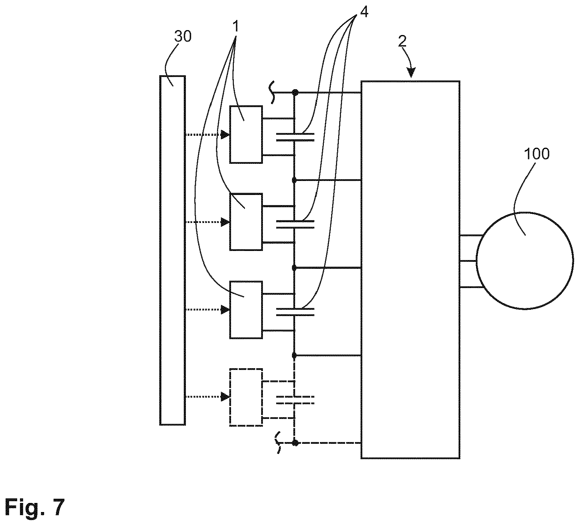

In Fig. 7 ist ein zweites Ausführungsbeispiel eines Multi-Level-Inverters 2, insbesondere eines 5- Level -Inverters 2, in Kombination mit vier seriell verschalteten, erfindungsgemäßen Zwischenkreisentladungseinheiten 1 dargestellt. Die Zwischenkreisentladungseinheiten 1 sind jeweils zu einem Zwischenkreiskondensator 4 parallelgeschaltet angeordnet.

Somit wird deutlich, dass eine beliebige Anzahl von Spannungsleveln bzw. Spannungsniveaus von Multi-Level-Invertern durch Einsatz einer adäquaten Anzahl von Zwischenkreisentladungseinheiten 1 handhabbar bzw. bereitstellbar sind. Es ist sowohl eine zweckmäßige Zwischenkreisentladung bereitstellbar, als auch eine Zwischenkreis- bzw. Spannungslevelbalancierung.

Beispielsweise weist ein 3-Level-Inverter mit einer Versorgungsspannung von 800V zwei Zwischenkreisspannungen auf. Im Falle symmetrischer Spannungsverteilung weisen beide Zwischenkreise ein relatives Spannungspotential von jeweils 400V auf. Im Falle asymmetrischer Spannungsverteilung kann ein erster Zwischenkreis beispielsweise 500V und ein zweiter Zwischenkreis 300V aufweisen.

Zusammenfassend kann anhand der erfindungsgemäßen Zwischenkreisentladungseinheit 1 eine selbsttätige aktive Entladung als auch eine passive Entladung über einen passiven Entladezweig in gekoppelter Form bereitgestellt werden.

Darüber hinaus können durch eine geeignete Anzahl von Zwischenkreisentladungseinheiten auch Multi-Level-Inverter in geeigneter Form betrieben werden, wobei sowohl die Zwischenkreisentladung als auch die Spannungslevel- bzw. Zwischenkreisbalancierung ermöglicht wird.

### Bezugszeichen

1 Zwischenkreisentladungseinheit
2 Inverter / Multi-Level-Inverter
4 Zwischenkreiskondensator
5 Spannungsquelle / Batterie
10 aktiver Entladezweig
12 erstes/erster Entladeelement/-widerstand
14 erstes Schaltelement
15 erster Steueranschluss
16 Diode
20 passiver Entladezweig
20a erster Subzweig
20b zweiter Subzweig
20c dritter Subzweig
20d vierter Subzweig
22 zweites/zweiter Entladeelement/-widerstand
24b zweites Schaltelement
24c drittes Schaltelement
24c viertes Schaltelement
25b zweiter Steueranschluss
25c dritter Steueranschluss
25d vierter Steueranschluss
26 Spannungsbegrenzungsventil / Z-Diode
30 Steuergerät
100 Motoreinheit

## Patentansprüche

1. Elektrische Baueinheit umfassend wenigstens eine Zwischenkreisentladungseinheit (1) zur Zwischenkreisentladung eines Multi-Level-Inverters, mit einem Kondensator (4) und einer parallel geschalteten Entladekreisschaltung,
wobei die Entladekreisschaltung einen aktiven Entladezweig (10) mit wenigstens einem ersten Entladeelement (12) und einen passiven Entladezweig (20) mit wenigstens einem zweiten Entladeelement (22) aufweist,
wobei der aktive Entladezweig (10) einen ersten Steueranschluss (15) und der passive Entladezweig (20) einen zweiten Steueranschluss (25b) aufweist, wobei der aktive Entladezweig (10) über den ersten Steueranschluss (15) derart mit dem passiven Entladezweig (20) gekoppelt ist, dass der aktive Entladezweig (10) durch den passiven Entladezweig (20) steuerbar ist,
**dadurch gekennzeichnet, dass**
die elektrische Baueinheit eine Mehrzahl von Zwischenkreisentladungseinheiten (1) aufweist, die als eine Serienschaltung angeordnet ist,
die elektrische Baueinheit ein Antriebsumrichter für einen Traktionsmotor eines Fahrzeuges mit mindestens drei Spannungsleveln ist, wobei die Zwischenkreisentladungseinheiten (1) derart ansteuerbar sind, dass die einzelnen Spannungslevel des Antriebsumrichters einstellbar sind.

2. Elektrische Baueinheit nach Anspruch 1, **dadurch gekennzeichnet, dass**
das erste Entladeelement (12) und das zweite Entladeelement (22) jeweils einen Widerstand umfasst.

3. Elektrische Baueinheit nach Anspruch 1 oder 2, **dadurch gekennzeichnet, dass**
der aktive Entladezweig (10) als eine Reihenschaltung aus dem ersten Entladeelement (12) und einem ersten Schaltelement (14), das den ersten Steueranschluss (15) aufweist, ausgebildet ist.

4. Elektrische Baueinheit nach einem der vorhergehenden Ansprüche,
**dadurch gekennzeichnet, dass**
der passive Entladezweig (20) wenigstens einen ersten Subzweig (20a) und einen zweiten Subzweig (20b) aufweist,
wobei der erste Subzweig (20a) in Verbindung mit dem ersten Steueranschluss (15) des aktiven Entladezweiges (10) ausgebildet ist und der zweite Subzweig (20b) als ein Sub-Entladezweig (20b) ausgebildet ist.

5. Elektrische Baueinheit nach Anspruch 4,
**dadurch gekennzeichnet, dass**
der aktive Entladezweig (10) und der passive Entladezweig (20) derart ausgebildet und miteinander verbunden sind, dass bei Sperrung einer Entladung entlang des wenigstens einen zweiten Subzweiges (20b) anhand des ersten Subzweiges (20a) eine Entladung über den aktiven Entladezweig (10) auslösbar ist.

6. Elektrische Baueinheit nach Anspruch 4 oder 5,
**dadurch gekennzeichnet, dass**
der erste Subzweig (20a) ein Spannungsbegrenzungsventil (26), insbesondere eine Z-Diode (26), aufweist,
wobei das Spannungsbegrenzungsventil (26) eine Durchbruchspannung aufweist, zur Auslösung einer aktiven Entladung entlang des aktiven Entladezweiges (10), insbesondere mit einer Durchbruchspannung von bis zu 15 V.

7. Elektrische Baueinheit nach einem der Ansprüche 4 bis 6,
**dadurch gekennzeichnet, dass**
der zweite Subzweig (20b) wenigstens ein zweites, steuerbares Schaltelement (24b) aufweist, zur Steuerung einer Entladung entlang des zweiten Subzweiges (20b) des passiven Entladezweiges (20).

8. Elektrische Baueinheit nach einem der vorhergehenden Ansprüche,
**dadurch gekennzeichnet, dass**
sämtliche Schaltelemente (14; 24b; 24c; 24d) des aktiven Entladezweiges (10) und des passiven Entladezweiges (20) in Form von Transistoren ausgebildet sind.

9. Elektrische Baueinheit nach einem der vorhergehenden Ansprüche,
**dadurch gekennzeichnet, dass**
die Zwischenkreisentladungseinheit (1) wenigstens ein Steuergerät (30) aufweist, das mit dem wenigstens einen zweiten Steueranschluss (25b; 25c; 25d) des passiven Entladezweiges (20) verbunden ist, zur Steuerung einer Entladung entlang des wenigstens einen zweiten Subzweiges (20b, 20c, 20d).

10. Elektrische Baueinheit nach einem der vorhergehenden Ansprüche, wobei die Entladung über den aktiven Entladezweig (10) bedarfsweise aktivierbar oder deaktivierbar ist.

11. Elektrische Baueinheit nach einem der vorhergehenden Ansprüche,
**dadurch gekennzeichnet, dass**
die einzelnen Spannungslevel des Antriebsumrichters für und/oder während eines Lade- und/oder Fahrbetriebs einstellbar sind.

12. Fahrzeug mit wenigstens einer elektrischen Baueinheit gemäß einem der vorhergehenden Ansprüche.

## Claims

1. An electrical assembly comprising at least one intermediate circuit discharge unit (1) for intermediate circuit discharge of a multi-level inverter, having a capacitor (4) and a discharge circuit connected in parallel,
wherein the discharge circuit includes an active discharge branch (10) having at least one first discharge element (12) and a passive discharge branch (20) having at least one second discharge element (22),
wherein the active discharge branch (10) includes a first control terminal (15) and the passive discharge branch (20) includes a second control terminal (25b), wherein the active discharge branch (10) is coupled to the passive discharge branch (20) via the first control terminal (15) so that the active discharge branch (10) can be controlled by the passive discharge branch (20), **characterized in that**
the electrical assembly comprises a plurality of intermediate circuit discharge units (1) configured as a series circuit,
the electrical assembly is a drive converter for a traction motor of a vehicle having at least three voltage levels, wherein the intermediate circuit discharge units (1) can be controlled so that the individual voltage levels of the drive converter are adjustable.

2. The electrical assembly according to claim 1, **characterized in that** the first discharge element (12) and the second discharge element (22) each comprise a resistor.

3. The electrical assembly according to claims 1 or 2, **characterized in that** the active discharge branch (10) is configured as a series connection of the first discharge element (12) and a first switching element (14) including the first control terminal (15).

4. The electrical assembly according to any one of the preceding claims,
**characterized in that**
the passive discharge branch (20) includes at least a first sub-branch (20a) and a second sub-branch (20b),
wherein the first sub-branch (20a) is configured in connection with the first control terminal (15) of the active discharge branch (10) and the second sub-branch (20b) is configured as a sub-discharge branch (20b).

5. The electrical assembly according to claim 4,
**characterized in that**
the active discharge branch (10) and the passive discharge branch (20) are configured and connected so that when a discharge along the at least one second sub-branch (20b) is blocked by means of the first sub-branch (20a), a discharge can be triggered via the active discharge branch (10).

6. The electrical assembly according to claims 4 or 5,
**characterized in that**
the first sub-branch (20a) includes a voltage limiter valve (26), in particular a Z-diode(26), wherein the voltage limiter valve (26) has a breakdown voltage for triggering an active discharge along the active discharge branch (10), in particular with a breakdown voltage of up to 15 V.

7. The electrical assembly according to anyone of claims 4 to 6,
**characterized in that**
the second sub-branch (20b) includes at least one second, controllable switching element (24b) for controlling a discharge along the second in sub-branch (20b) of the passive discharge branch (20).

8. The electrical assembly according to any one of the preceding claims,
**characterized in that**
all switching elements (14; 24b; 24c; 24d) of the active discharge branch (10) and the passive discharge branch (20) are configured as transistors.

9. The electrical assembly according to any one of the preceding claims,
**characterized in that**
the intermediate circuit discharge unit (1) includes at least one controller (30), connected to the at least one second control terminal (25b; 25c; 25d) of the passive discharge branch (20) for controlling a discharge along the at least one second sub-branch (20b, 20c, 20d).

10. The electrical assembly according to one of the preceding claims, wherein the discharge can be activated or deactivated as required via the active discharge branch (10).

11. The electrical assembly according to any one of the preceding claims,
**characterized in that**
the individual voltage levels of the drive converter can be set for and/or during a charging and/or driving mode.

12. A vehicle including at least one electrical assembly according to any one of the preceding claims.

## Revendications

1. Unité électrique comprenant au moins une unité de décharge de circuit intermédiaire (1) pour décharger le circuit intermédiaire d'un onduleur multiniveau, avec un condensateur (4) et un circuit de décharge connecté en parallèle,
dans laquelle le circuit de décharge comporte une branche de décharge active (10) avec au moins un premier élément de décharge (12) et une branche de décharge passive (20) avec au moins un deuxième élément de décharge (22),
dans laquelle la branche de décharge active (10) comporte une première connexion de commande (15) et la branche de décharge passive (20) comporte une deuxième connexion de commande (25b),
dans laquelle la branche de décharge active (10) est connectée à la branche de décharge passive (20) via la première connexion de commande (15) de telle sorte que la branche de décharge active (10) peut être commandée par la branche de décharge passive (20),
**caractérisée en ce que**
l'unité électrique comporte une pluralité d'unités de décharge de circuit intermédiaire (1) qui sont agencées sous forme d'un circuit en série,
l'unité électrique est un onduleur d'entraînement pour un moteur de traction d'un véhicule présentant au moins trois niveaux de tension, moyennant quoi les unités de décharge de circuit intermédiaire (1) peuvent être commandées de telle sorte que les niveaux de tension individuels de l'onduleur d'entraînement peuvent être réglés.

2. Unité électrique selon la revendication 1, **caractérisée en ce que**
le premier élément de décharge (12) et le deuxième élément de décharge (22) comportent chacun une résistance.

3. Unité électrique selon la revendication 1 ou 2, **caractérisée en ce que**
la branche de décharge active (10) est réalisée sous forme d'une connexion en série du premier élément de décharge (12) et d'un premier élément de commutation (14) qui comporte la première connexion de commande (15).

4. Unité électrique selon l'une des revendications précédentes,
**caractérisée en ce que**
la branche de décharge passive (20) comporte au moins une première sous-branche (20a) et une deuxième sous-branche (20b),
dans laquelle la première sous-branche (20a) est réalisée en liaison avec la première connexion de commande (15) de la branche de décharge active (10) et la deuxième sous-branche (20b) est réalisée comme une sous-branche de décharge (20b).

5. Unité électrique selon la revendication 4,
**caractérisée en ce que**
la branche de décharge active (10) et la branche de décharge passive (20) sont réalisées et connectées entre elles de telle sorte que lorsqu'une décharge est bloquée dans ladite au moins une deuxième sous-branche (20b), une décharge peut être déclenchée via la branche de décharge active (10) via la première sous-branche (20a).

6. Unité électrique selon la revendication 4 ou 5,
**caractérisée en ce que**
la première sous-branche (20a) comporte un interrupteur de limitation de tension (26), en particulier une diode Zener (26),
dans laquelle l'interrupteur de limitation de tension (26) présente une tension de claquage pour déclencher une décharge active via la branche de décharge active (10), en particulier avec une tension de claquage allant jusqu'à 15 V.

7. Unité électrique selon l'une des revendications 4 à 6,
**caractérisée en ce que**
la deuxième sous-branche (20b) comporte au moins un deuxième élément de commutation commandable (24b) pour commander une décharge via la deuxième sous-branche (20b) de la branche de décharge passive (20).

8. Unité électrique selon l'une des revendications précédentes,
**caractérisée en ce que**
tous les éléments de commutation (14 ; 24b ; 24c ; 24d) de la branche de décharge active (10) et de la branche de décharge passive (20) sont réalisés sous forme de transistors.

9. Unité électrique selon l'une des revendications précédentes,
**caractérisée en ce que**
l'unité de décharge de circuit intermédiaire (1) comporte au moins un dispositif de commande (30) qui est connecté à ladite au moins une deuxième connexion de commande (25b ; 25c ; 25d) de la branche de décharge passive (20), pour commander une décharge via ladite au moins une deuxième sous-branche (20b, 20c, 20d).

10. Unité électrique selon l'une des revendications précédentes, dans laquelle la décharge peut être activée ou désactivée selon les besoins via la branche de décharge active (10).

11. Unité électrique selon l'une des revendications précédentes,
**caractérisée en ce que**
les niveaux de tension individuels de l'onduleur d'entraînement peuvent être réglés pour et/ou pendant la charge et/ou la conduite.

12. Véhicule équipé d'au moins une unité électrique selon l'une des revendications précédentes.
